# EUROPÄISCHE PATENTANMELDUNG

(11) **EP 4 084 177 A1**
(43) Veröffentlichungstag der Anmeldung: **02.11.2022**
(21) Anmeldenummer: 22168492.1
(22) Anmeldetag: 14.04.2022
(51) Int. Cl.: H01M 10/04, B30B 9/00, B30B 15/00, H01M 50/213

(54) **VERFAHREN ZUR HERSTELLUNG EINES BATTERIEMODULS, VORRICHTUNG ZU DESSEN DURCHFÜHRUNG UND VERWENDUNG EINES BATTERIEMODULS**

(30) Priorität: 28.04.2021 DE 102021204242
(71) Anmelder: Robert Bosch GmbH, 70442 Stuttgart (DE)
(72) Erfinder: Krebs, Juergen, 96123 Litzendorf (DE); Folger, Matthias, 96170 Priesendorf (DE); Thomann, David, 96052 Bamberg (DE)

(57) **Zusammenfassung**

Die Erfindung betrifft ein Verfahren (30, 40) zur Herstellung eines Batteriemoduls (116, 216), eine Vorrichtung (10, 20) zu dessen Durchführen und eine Verwendung eines solchen Verfahrens. Dabei ist das Verfahren (30, 40) zur Herstellung eines Batteriemoduls (116, 216) umfassend zumindest eine Batteriezelle (108) und ein Batteriemodulgehäuse (112, 212) dadurch gekennzeichnet, dass die zumindest eine Batteriezelle (108) mittels Pressen und unter Anwendung von Vibrationen in das Batteriemodulgehäuse (112, 212) eingeführt wird.

## Beschreibung

Die vorliegende Erfindung bezieht sich auf ein Verfahren zur Herstellung eines Batteriemoduls und eine Vorrichtung zum Durchführen eines solchen Verfahrens gemäß dem Oberbegriff der unabhängigen Patentansprüche. Weiterhin betrifft die Erfindung auch eine Verwendung eines Batteriemoduls hergestellt nach einem solchen Verfahren.

### Stand der Technik

Eine Batterie ist ein elektrochemischer Wandler, der bei seiner Entladung gespeicherte chemische Energie in elektrische Energie umwandelt. Die elektrische Energie kann beispielsweise zum Fahrzeugantrieb in Elektrofahrzeugen verwendet werden. Dafür sind insbesondere lithiumhaltige Batterien aufgrund ihrer vergleichsweise hohen Zuverlässigkeit und Leistungsfähigkeit geeignet.

Eine derartige Batterie setzt sich in der Regel aus mehreren Batteriemodulen zusammen, welche wiederum eine Mehrzahl an Batteriezellen enthalten. Die Batteriezellen, die jeweils ein Zellgehäuse umfassen, werden unter Ausbildung eines Batteriemoduls in ein gemeinsames Batteriemodulgehäuse aufgenommen. Das Zellgehäuse kann zylindrisch, prismatisch oder folienartig ausgebildet sein. Eine Batteriezelle mit einem zylindrisch ausgeführten Zellgehäuse wird auch als Rundzelle bezeichnet. Solche Rundzellen werden beispielsweise in ein Batteriemodulgehäuse mittels Pressen eingeführt, um ein Batteriemodul auszubilden. Jedoch können derart eingeführte Rundzellen nach Rücknahme der Presskraft unter Veränderung ihrer Position innerhalb des Batteriemodulgehäuses zurückfedern. Dies führt dazu, dass das Einführen der Rundzellen ggf. mehrmals wiederholt werden muss und die Herstellungszeit somit verlängert wird. Um diese Nachteile zu überwinden, kann eine größere Presskraft verwendet werden. Dies kann jedoch wiederum einzelne Batteriezellen mechanisch beschädigen.

Aus dem Dokument DE 10 2012 222 254 11 A1 ist ein Verfahren zur elektrischen Kontaktierung von Batteriepolen unter Verwendung einer Zugkraft und einer Ultraschallschwingeinrichtung bekannt.

Aus dem Dokument JP 2009 117 234 A ist ein Verfahren zur Herstellung einer Batterie bekannt, bei dem zumindest ein Batteriezellenpol einzelner Batteriezellen mittels Ultraschall in ein Verbindungselement der Batterie für die Batteriezellen eingefügt wird.

### Offenbarung der Erfindung

Gemäß der vorliegenden Erfindung werden ein Verfahren zur Herstellung eines Batteriemoduls und eine Vorrichtung zum Durchführen eines solchen Verfahrens mit den kennzeichnenden Merkmalen der unabhängigen Patentansprüche bereitgestellt. Das Batteriemodul umfasst hierbei zumindest eine Batteriezelle und ein Batteriemodulgehäuse. Weiterhin ist auch die Verwendung eines solchen Batteriemoduls Gegenstand der vorliegenden Erfindung.

Erfindungsgemäß ist vorgesehen, dass die zumindest eine Batteriezelle mittels Pressen und unter Anwendung von Vibrationen in das Batteriemodulgehäuse eingeführt wird.

Da die Vibrationen hinsichtlich deren Amplituden und Frequenzen je nach Anforderungen einstellbar sind, können vor allem hochfrequente Vibrationen verwendet werden, um die Reibungskraft entlang beispielsweise der zumindest Batteriezelle zu vermindern. Auf diese Weise werden die anzuwendende Presskraft und somit die Druckbelastung auf die zumindest Batteriezelle sowie auf das Batteriemodulgehäuse reduziert. Ein gemäß dem erfindungsgemäßen Verfahren hergestelltes Batteriemodul weist daher eine bessere mechanische Stabilität auf.

Weitere vorteilhafte Ausführungsformen der vorliegenden Erfindung sind Gegenstand der Unteransprüche.

Vorzugsweise werden die Vibrationen mittels eines Ultraschallgenerators erzeugt. Auf diese Weise werden die Vibrationen relativ einfach erzeugt, da sich der Ultraschallgenerator in eine bestehende Herstellungsanlage für die Batteriemodule ohne Weiteres einbauen lässt. Das bedeutet, dass keine baulichen oder funktionellen Änderungen an der bestehenden Herstellungsanlage vorgenommen werden müssen.

Weiter vorzugsweise werden die Vibrationen direkt an zumindest einer Aufnahme zum Aufnehmen eines Batteriezellenpols der zumindest einen Batteriezelle erzeugt. Dies hat den Vorteil, dass die Batteriezelle mit einer geringen Presskraft genau an deren vorbestimmter Position in das Batteriemodulgehäuse eingeführt wird.

Weiterhin vorzugsweise wird das Batteriemodulgehäuse mit einem Kühlungsmedium gefüllt. Auf diese Weise fungiert das Batteriemodulgehäuse nicht nur als ein mechanischer Halter für die darin enthaltenden Batteriezellen, sondern auch als Kühlungsgehäuse für dieselben. Die betroffenen Batteriezellen werden somit direkt durch das Kühlungsmedium in dem Batteriemodulgehäuse gekühlt. Diese Maßnahme erlaubt eine schnelle und wirksame Kühlung auf der Zellebene.

Besonders vorzugsweise wird die zumindest eine Batteriezelle mittels eines Dichtungselements von dem Batteriemodulgehäuse elektrisch isoliert. Dadurch kann neben der elektrischen Isolation auch eine mechanische Beschädigung an dem Batteriezellen- und Batteriemodulgehäuse, welche üblicherweise metallisch ausgeführt sind, während des Einführens der zumindest einen Batteriezelle in das Batteriemodulgehäuse vermieden werden.

Bevorzugt ist die zumindest eine Batteriezelle eine Rundzelle. Da bei einer solchen Rundzelle beide Batteriezellenpole an gegenüberliegenden Seiten vorgesehen sind, wird nur eine einzige Aufnahme benötigt, um einen der beiden Batteriezellenpole aufzunehmen und somit die Rundzelle mechanisch zu stützen während die Rundzelle in das Batteriemodulgehäuse eingeführt wird.

Gemäß einem weiteren Aspekt der vorliegenden Erfindung wird eine Vorrichtung zum Durchführen des vorbeschriebenen Verfahrens bereitgestellt. Dabei umfasst die Vorrichtung eine Presse und eine erste Aufnahme zum Aufnehmen eines ersten Batteriezellenpols einer Batteriezelle. Erfindungsgemäß ist vorgesehen, dass die Vorrichtung weiter ein Mittel zum Erzeugen von Vibrationen umfasst.

So ist es von Vorteil, wenn das Mittel zum Erzeugen von Vibrationen ein Ultraschallgenerator ist.

Gemäß einer ersten bevorzugten Ausführungsform der Erfindung ist das Mittel zum Erzeugen von Vibrationen zwischen der Presse und der ersten Aufnahme angeordnet.

Gemäß einer zweiten bevorzugten Ausführungsform der Erfindung ist das Mittel zum Erzeugen von Vibrationen an einer zweiten Aufnahme zum Aufnehmen eines zweiten Batteriezellenpols der Batteriezelle angeordnet. Die zweite Aufnahme ist beispielsweise der ersten Aufnahme gegenüberliegend an der Vorrichtung positioniert.

Ein nach dem vorbeschriebenen Verfahren hergestelltes Batteriemodul ist besonders geeignet für die Herstellung eines Batteriemoduls zur Verwendung in elektrischen Fahrzeugen, in Hybridfahrzeugen oder in Plug-In-Hybridfahrzeugen.

### Kurze Beschreibung der Figuren

In der Zeichnung sind vorteilhafte Ausführungsformen der vorliegenden Erfindung dargestellt und in der nachfolgenden Figurenbeschreibung näher erläutert. Es zeigt:
- Figur 1: eine Schnittansicht einer Vorrichtung zum Durchführen eines Verfahrens zur Herstellung eines Batteriemoduls gemäß einer ersten Ausführungsform der vorliegenden Erfindung,
- Figur 2: eine Schnittansicht einer Vorrichtung zum Durchführen eines Verfahrens zur Herstellung eines Batteriemoduls gemäß einer zweiten Ausführungsform der vorliegenden Erfindung,
- Figur 3: ein beispielhaftes Ablaufdiagramm eines erfindungsgemäßen Verfahrens zur Herstellung eines Batteriemoduls mittels einer Vorrichtung gemäß Figur 1 und
- Figur 4: ein beispielhaftes Ablaufdiagramm eines erfindungsgemäßen Verfahrens zur Herstellung eines Batteriemoduls mittels einer Vorrichtung gemäß Figur 2.

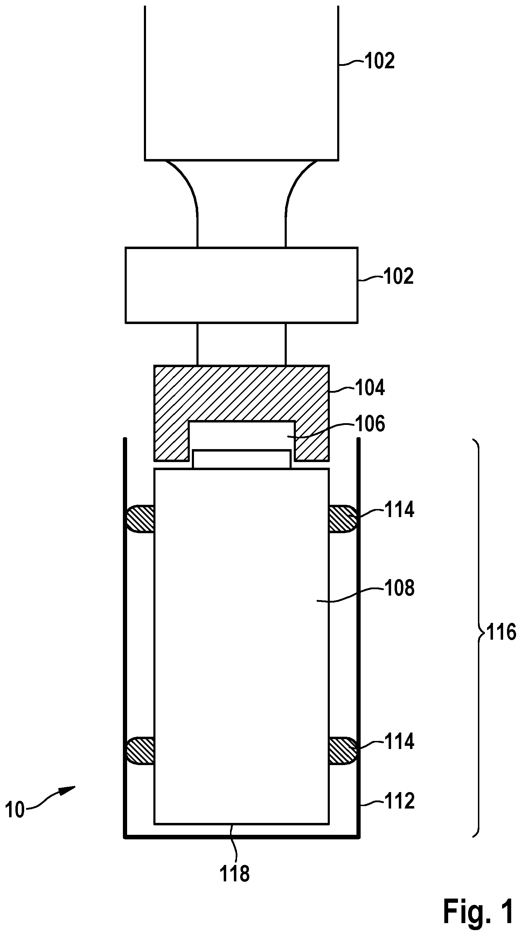

In Figur 1 ist eine erste Ausführungsform einer erfindungsgemäßen Vorrichtung 10 gemäß der vorliegenden Erfindung schematisch dargestellt.

Die Vorrichtung 10 umfasst beispielsweise eine Presse 102 und eine erste Aufnahme 104 zum Aufnehmen eines ersten Batteriezellenpols 106 einer Batteriezelle 108. Die Batteriezelle 108 ist beispielsweise eine Rundzelle. Der erste Batteriezellenpol 106 ist dabei formschlüssig in der ersten Aufnahme 104 aufgenommen. Die Vorrichtung 10 umfasst weiter einen Ultraschallgenerator 110, welcher zwischen der Presse 102 und der ersten Aufnahme 104 angeordnet ist. Der Ultraschallgenerator 110 dient beispielsweise dazu, Vibrationen an der ersten Aufnahme 104 zu erzeugen.

Mittels der Vorrichtung 10 wird die Batteriezelle 108 in ein Batteriemodulgehäuse 112 eingeführt und fixiert. Zwischen dem Batteriemodulgehäuse 112 und der Batteriezelle 108 sind zwei Dichtungselemente 114 angeordnet. Diese Dichtungselemente 114 sind beispielsweise ringförmig ausgeführt und rund um die Batteriezelle 108 herum angebracht. Die zumindest zwei Dichtungselemente 114 fungieren zusätzlich als elektrische Isolationselemente, um die Batteriezelle 108 gegenüber dem Batteriemodulgehäuse 112 elektrisch zu isolieren. Ein Batteriemodul 116 setzt sich dabei beispielsweise zumindest aus dem Batteriemodulgehäuse 112, der Batteriezelle 108 und den Dichtungselementen 114 zusammen.

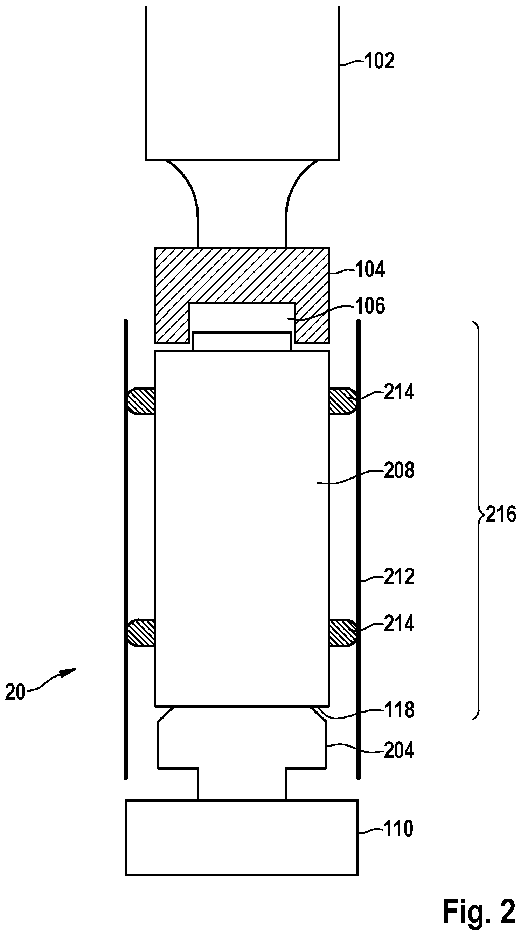

In Figur 2 ist eine zweite Ausführungsform einer erfindungsgemäßen Vorrichtung 20 gemäß der vorliegenden Erfindung schematisch dargestellt. Es bezeichnen gleiche Bezugszeichen gleiche Bauteilkomponenten wie in Figur 1.

Die Vorrichtung 20 umfasst dabei eine Presse 102, eine erste Aufnahme 104 zum Aufnehmen eines ersten Batteriezellenpols 106 einer Batteriezelle 108 und eine zweite Aufnahme 204 zum Aufnehmen eines zweiten Batteriezellenpols 118 der Batteriezelle 108. Der erste Batteriezellenpol 106 weist bspw. eine negative Polarität auf und ist räumlich gesehen an der Batteriezelle 108 gegenüber dem zweiten Batteriezellenpol 118 angeordnet, welcher als positiver Batteriezellenpol ausgeführt ist. Die Vorrichtung 20 umfasst weiter einen Ultraschallgenerator 110, welcher an der zweiten Aufnahme 204 angeordnet ist. Mittels der Vorrichtung 20 wird die Batteriezelle 108 in ein offenes Batteriemodulgehäuse 212 eingeführt, welches bspw. keinen Deckel und keinen Boden aufweist. Das Batteriemodulgehäuse 212 ist beispielsweise auf einem nicht dargestellten Halter platziert, welcher eine Öffnung für die zweite Aufnahme 204 umfasst. Die Batteriezelle 108 ist durch zumindest zwei Dichtungselemente 214, welche bspw. auch durch Auftrag eines Klebstoffs ausgebildet sein können, in dem Batteriemodulgehäuse 212 fixiert. Ein Batteriemodul 216 setzt sich dabei beispielsweise zumindest aus dem Batteriemodulgehäuse 212, der Batteriezelle 108 und den Dichtungselementen 214 zusammen.

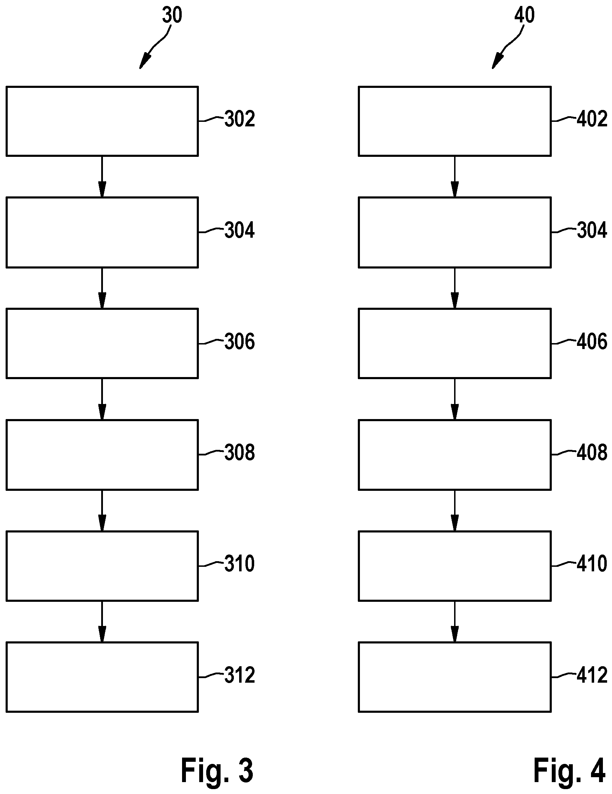

In Figur 3 ist ein beispielhaftes Ablaufdiagramm eines erfindungsgemäßen Verfahrens 30 zur Herstellung eines Batteriemoduls 116 mittels einer Vorrichtung 10 gemäß Figur 1 schematisch dargestellt.

Zunächst werden in einem ersten Verfahrensschritt 302 eine Batteriezelle 108 mit einem ersten Batteriezellenpol 106 und einem zweiten Batteriezellenpol 118 und mit zwei Dichtungselementen 114 bereitgestellt. In dem ersten Verfahrensschritt 302 wird auch ein Batteriemodulgehäuse 112 bereitgestellt. Daraufhin wird in einem zweiten Verfahrensschritt 304 der erste Batteriezellenpol 106 in eine erste Aufnahme 104 der Vorrichtung 10 eingeführt. Weiter werden in einem dritten Verfahrensschritt 306 Vibrationen mittels eines Ultraschallgenerators 110 der Vorrichtung 10 an der ersten Aufnahme 104 erzeugt. Weiterhin wird in einem vierten Verfahrensschritt 308 die Batteriezelle 108 in das Batteriemodulgehäuse 112 eingeführt, während die Vibrationen weiter an der ersten Aufnahme 104 mittels des Ultraschallgenerators 110 erzeugt werden. Daraufhin wird in einem fünften Verfahrensschritt 310 die erste Aufnahme 104 von dem ersten Batteriezellenpol 106 getrennt. Danach wird der Ultraschallgenerator 110 bspw. ausgeschaltet. Anschließend wird in einem sechsten Verfahrensschritt 312 das Batteriemodulgehäuse 112 mit einem Kühlungsmedium gefüllt und dann mit einem nicht dargestellten Gehäusedeckel verschlossen. Das Kühlungsmedium kann beispielsweise ein Glykol-WasserGemisch sein.

In Figur 4 ist ein beispielhaftes Ablaufdiagramm eines erfindungsgemäßen Verfahrens 40 zur Herstellung eines Batteriemoduls 216 mittels einer Vorrichtung 20 gemäß Figur 2 schematisch dargestellt. Es bezeichnen gleiche Bezugszeichen gleiche Verfahrensschritte wie in Figur 3.

Zunächst wird in einem ersten Verfahrensschritt 402 eine Batteriezelle 108 mit einem ersten Batteriezellenpol 106 und einem zweiten Batteriezellenpol 118 und mit zwei Dichtungselementen 214 bereitgestellt. In dem ersten Verfahrensschritt 402 wird auch ein Batteriemodulgehäuse 212 bereitgestellt, welches an seinen gegenüberliegenden Seiten mit Öffnungen versehen sind. Weiter werden in einem dritten Verfahrensschritt 406 Vibrationen mittels eines Ultraschallgenerators 110 an einer zweiten Aufnahme 204 der Vorrichtung 20 erzeugt. Daraufhin wird in einem vierten Verfahrensschritt 408 die Batteriezelle 108 in das Batteriemodulgehäuse 212 derart eingeführt, dass der zweite Batteriezellenpol 118 der Batteriezelle 108 in der zweiten Aufnahme 204 der Vorrichtung 20 aufgenommen wird. Weiter werden in einem fünften Verfahrensschritt 410 die erste Aufnahme 104 von dem ersten Batteriezellenpol 106 und zugleich die zweite Aufnahme 204 von dem zweiten Batteriezellenpol 108 getrennt. Anschließend wird in einem sechsten Verfahrensschritt 412 das Batteriemodulgehäuse 212 nach einem Befüllen mit einem Kühlungsmedium mit einem Boden und einem Deckel verschlossen.

Die erfindungsgemäßen Batteriemodule 116, 216 lassen sich vorteilhaft in lithiumhaltigen Batteriesystemen, wie beispielsweise Lithium-Ionen-Batterien, lithiumhaltigen Solid-State-Batterien, Lithium-Schwefel- oder Lithium-Luft-Batterien, verwenden. Diese wiederum finden Anwendung in E-Bikes oder Kraftfahrzeugen sowie in der stationären Speicherung elektrischer Energie.

## Patentansprüche

1. Verfahren zur Herstellung eines Batteriemoduls (116, 216) umfassend zumindest eine Batteriezelle (108) und ein Batteriemodulgehäuse (112, 212),
**dadurch gekennzeichnet, dass**
die zumindest eine Batteriezelle (108) mittels Pressen und unter Anwendung von Vibrationen in das Batteriemodulgehäuse (112, 212) eingeführt wird.

2. Verfahren nach Anspruch 1,
**dadurch gekennzeichnet, dass**
die Vibrationen mittels eines Ultraschallgenerators (110) erzeugt werden.

3. Verfahren nach einem der vorhergehenden Ansprüche 1 bis 2,
**dadurch gekennzeichnet, dass**
die Vibrationen direkt an zumindest einer Aufnahme (104, 204) zum Aufnehmen eines Batteriezellenpols (106, 118) der zumindest einen Batteriezelle (108) erzeugt werden.

4. Verfahren nach einem der vorhergehenden Ansprüche 1 bis 3,
**dadurch gekennzeichnet, dass**
das Batteriemodulgehäuse (112, 212) mit einem Kühlungsmedium gefüllt wird.

5. Verfahren nach einem der vorhergehenden Ansprüche 1 bis 4,
**dadurch gekennzeichnet, dass**
die zumindest eine Batteriezelle (108) mittels eines Dichtungselements (114, 214) von dem Batteriemodulgehäuse (112, 212) elektrisch isoliert wird.

6. Verfahren nach einem der vorhergehenden Ansprüche 1 bis 5,
**dadurch gekennzeichnet, dass**
die zumindest eine Batteriezelle (108) eine Rundzelle ist.

7. Vorrichtung zum Durchführen eines Verfahrens (30, 40) nach einem der vorhergehenden Ansprüche, umfassend eine Presse (102) und eine erste Aufnahme (104) zum Aufnehmen eines ersten Batteriezellenpols (106) einer Batteriezelle (108),
**dadurch gekennzeichnet, dass**
die Vorrichtung (10, 20) ein Mittel zum Erzeugen von Vibrationen umfasst.

8. Vorrichtung nach Anspruch 7,
**dadurch gekennzeichnet, dass**
das Mittel zum Erzeugen von Vibrationen ein Ultraschallgenerator (110) ist.

9. Vorrichtung nach einem der vorhergehenden Ansprüche 7 bis 8,
**dadurch gekennzeichnet, dass**
das Mittel zum Erzeugen von Vibrationen zwischen der Presse (102) und der ersten Aufnahme (104) oder
an einer zweiten Aufnahme (204) zum Aufnehmen eines zweiten Batteriezellenpols (118) der Batteriezelle (108) angeordnet ist.

10. Verwendung eines Batteriemoduls hergestellt nach einem der vorhergehenden Ansprüche 1 bis 6 in einem Elektrofahrzeug (EV), in einem Hybridfahrzeug (HEV) oder in einem Plug-In-Hybridfahrzeug (PHEV).
